# EUROPÄISCHE PATENTSCHRIFT

(11) **EP 0 598 370 B1**
(45) Veröffentlichungstag und Bekanntmachung des Hinweises auf die Patenterteilung: **24.04.1996**
(21) Anmeldenummer: 93118431.1
(22) Anmeldetag: 15.11.1993
(51) Int. Cl.: B62D 25/02, B62D 35/00

(54) **Personenkraftwagen**
Passenger car
Voiture particulière

(30) Priorität: 19.11.1992 DE 4238927
(43) Veröffentlichungstag der Anmeldung: 25.05.1994
(73) Patentinhaber: Hufgard, Albert, D-63768 Hösbach (DE)
(72) Erfinder: Hufgard, Albert, D-63768 Hösbach (DE)
(74) Vertreter: Wolf, Günter, Dipl.-Ing.

(56) Entgegenhaltungen:
- DE-C- 767 674
- GB-A- 2 254 055
- US-A- 2 608 264
- US-A- 2 612 964

## Beschreibung

Die Erfindung betrifft einen Personenkraftwagen, insbesondere PKW mit elektromotorischem Antrieb, gemäß Oberbegriff des Patentanspruches 1.

Personenkraftwagen dieser Art sind bspw. nach der GB-A-2 254 055 bekannt und auch nach der DE-A-767 674. Der Luftwiderstand von Personenkraftwagen ist ganz wesentlich von der Größe und Gestaltung der frontalen Gesamtanströmfläche abhängig, die man deshalb so windschnittig wie möglich, d.h. möglichst schräg nach hinten ansteigend ausbildet, was allerdings im vorderen Unterteil der Karosserie seine Grenzen findet, und zwar insbesondere dann, wenn das Antriebsaggregat vorn im Fahrzeug angeordnet ist. Dies gilt auch für die Fahrzeuge nach den oben genannten Druckschriften, bei denen die die Träger bildenden Hohlkörper vorn und hinten geschlossen sind. Zur Luftwiderstandsreduzierung trägt auch eine Fahrzeugkonstruktion nach der US-A-2 612 964 nicht bei, die zwar einen vorn und hinten offenen Kanal aufweist, aber abgesehen davon, daß es sich hierbei um einen mittigen Kanal handelt, in dem Luftwiderstand bildend der Motor mit Kühlgebläse, Auspufftopf und Getriebeteile untergebracht sind, hat dieser Kanal anströmseitig in bezug auf die gesamte Frontfläche einen sehr kleinen Querschnitt, der sich dann erweitert und nach hinten wieder etwa entsprechend der Anströmöffnung verengt.

Der Erfindung liegt die Aufgabe zugrunde, einen Personenkraftwagen bzw. dessen Karosserie dahingehend auszubilden und zu verbessern, daß die widerstandswirksame Frontfläche wesentlich reduziert ist, ohne daß dadurch die Stabilität der Karosserie gemindert sein soll.

Diese Aufgabe ist mit einem Personenkraftwagen der eingangs genannten Art nach der Erfindung durch die im Kennzeichen des Patentanspruches 1 angeführten Merkmale gelöst.

Unter "mindestens der halben Querschnittsgröße des Karosserieunterteiles" ist dabei zu verstehen, daß, orientiert an üblichen Breiten von Personenkraftwagen, zwischen den Trägern soviel Platz verbleiben muß, daß dort eine normale Sitzbreite verfügbar bleibt, d.h., die Querschnittsfläche beider Träger ist dabei so bemessen, daß ein nicht unwesentlicher Teil der widerstandswirksamen Anströmfläche des Karosserieunterteiles keinen frontalen Anströmwiderstand mehr bietet.

Die bevorzugt im Querschnitt kreisförmigen Träger können aber auch kastenförmige oder auch ovale Querschnitte aufweisen. Insbesondere für im Querschnitt kastenförmige oder ovale Träger kann dabei vorgesehen werden, in diesen mindestens eine längserstreckte und quer zu deren Längserstreckung orientierte Versteifungswand anzuordnen, was noch näher erläutert wird.

Im sich zwischen den Trägern ergebenden Freiraum sind dabei die Sitze angeordnet und vor oder hinter diesen das Antriebsaggregat, Batterien, Tank, Kofferraum u. dgl.. Um die widerstandswirksame Frontfläche so weit wie möglich reduzieren zu können, ist die Höhe der Träger gleich oder angenähert gleich der halben Höhe der Karosserie bemessen.

Um ferner bei Unfällen die Verletzungsgefahr für Personen durch die Umfangsränder der offenen Träger zu reduzieren, sind mindestens vorn vor den Umfangsrändern der Träger mindestens stirnseitig abgerundete Umfangsrandabschirmungen angeordnet, die zweckmäßig als dem Umfangsprofil der Träger entsprechende Rahmen ausgebildet sind. Weiter vorteilhafte Ausgestaltungen bestehen darin, die Radkästen der Karosserie zumindest teilweise in den Innenraum der Träger ragend anzuordnen, wobei mindestens die frontalen Anströmflächen der Radkästen über die davor verfügbare Gesamtlänge der Träger geneigt und erstreckt sind. Schließlich können, sofern das Antriebsaggregat des Fahrzeuges einer Kühlung bedarf, in mindestens einem der Träger in Längserstreckung längserstreckte Antriebskühlaggregate angeordnet sein. Im übrigen bieten die nach hinten und vorn offenen Träger nur für den Bedarfsfall den Vorteil, in diesen langes, sonst nicht ohne weiteres im Fahrzeug unterbringbares Transportgut (bspw. Ski, Stangen o. dgl.) unterbringen zu können, das dann natürlich in geeigneter Weise befestigt werden muß.

Je nach Gesamtdimensionierung der Karosserie bzw. Gesamtkonzeption des Fahrzeuges ist es dabei durchaus möglich, im Freiraum zwischen den Trägern nicht nur hintereinander bspw. zwei Sitze anzuordnen, sondern auch vier Sitze in der üblichen Anordnung, wobei allerdings eine gewisse Sitzbeengheit in Kauf genommen werden müßte, da ja noch zur Gesamtsitzbreite die Breite der beiden Träger hinzukommt. Der erfindungsgemäße Personenkraftwagen macht im übrigen, wie beim Fahrzeug nach der DE-A-767 674, Seitenwandverstärkungen entbehrlich, da die rohrförmigen, nicht durch Türöffnungen unterbrochenen Träger entsprechend dimensioniert, schon in sich wesentlich stabiler sind als normale Seitenwände bzw. Türen von Kraftfahrzeugen.

Der erfindungsgemäße Personenkraftwagen wird nachfolgend anhand der zeichnerischen Darstellung von Ausführungsbeispielen näher erläutert, die stark schematisch dargestellt sind.

Es zeigt
- Fig. 1A-C: den neuartigen Personenkraftwagen in Seitenansicht, Draufsicht und Vorderansicht;
- Fig. 2, 3: weitere Vorderansichten mit anderer Querschnittsprofilierung der Träger und
- Fig. 4A, B: Vorder- und Seitenansichten eines Personenkraftwagens in einer weiteren Ausführungsform.

Für alle dargestellten Ausführungsformen des Personenkraftwagens, der mit vier Rädern 10 versehen ist, ist wesentlich, daß die Hohlkörper aus zwei vorn und hinten offenen, rohrförmigen Trägern 2 gebildet sind und alle Querschnitte der Träger 2 zwischen den querschnittsgleichen Öffnungen 2' dem Querschnitt dieser Öffnungen entsprechen und der Querschnitt beider Träger 2 mindestens der halben Querschnittsgröße des Karosserteunterteiles 1' entspricht.

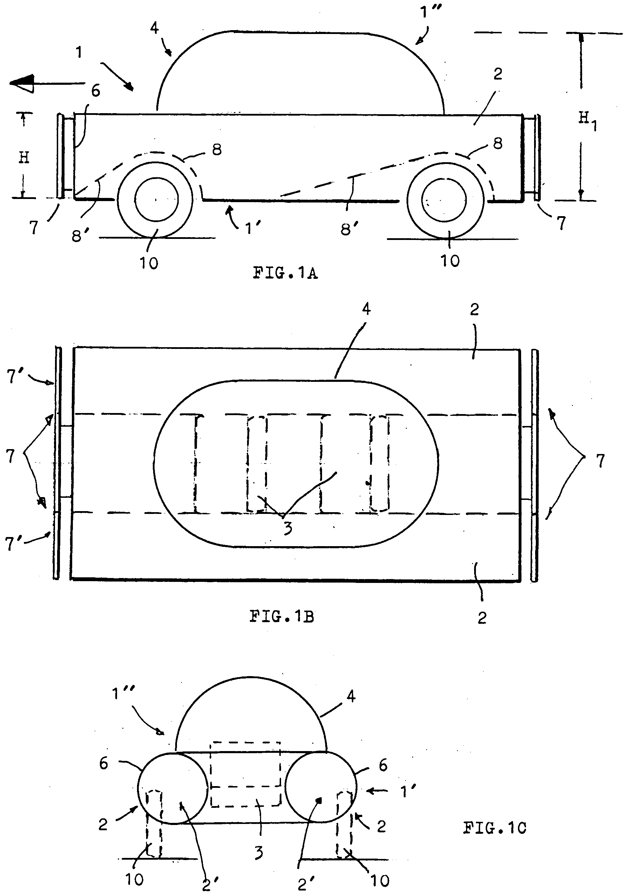

Alle Ausführungsbeispiele sind dabei mit der Anordnung von zwei Sitzen hintereinander im Freiraum zwischen den beiden Trägern 2 dargestellt, die sich über die Gesamtlänge des Personenkraftwagens erstrecken. Der restliche Freiraum in der Karosserie 1 dient zur Unterbringung des Antriebsaggregates (nicht dargestellt) und sonst bei Kraftwagen notwendiger Elemente und Räume. Für die Querschnittsbemessung und Formgebung der Träger 2 in bezuzg auf die widerstandswirksame Frontfläche (siehe Fig. 1C, 2, 3, 4A) sind Querschnittsverhältnisse und Anordnungen maßgebend, wie sich diese in etwa aus den Darstellungen ergeben.

Die Höhe H der Träger 2 ist dabei und wie ersichtlich gleich oder angenähert gleich der halben Höhe H₁ der Karosserie 1. Die Ausgestaltung des Oberteiles 1'' der Karosserie 1 als mindestens teilweise zu öffnender Einstieg 4 bedarf keiner näheren Erläuterungen, da solche Klapp-, schwenk- oder verschiebbaren Einstiege 4 hinlänglich bekannt sind.

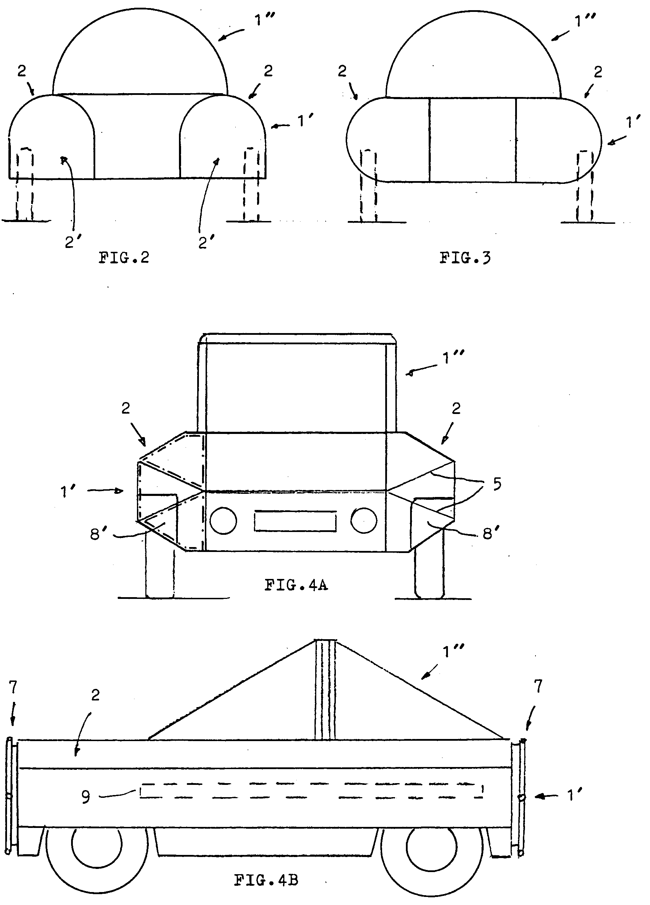

Bezüglich der Maßgabe, daß in den Trägern 2 mindestens eine längserstreckte und quer zu deren Längserstreckung orientierte Versteifungswand 5 angeordnet sein kann, wird auf Fig. 4A verwiesen, da bei solchen im Querschnitt mehr kastenförmigen Trägern 2 Versteifungswände 5 am zweckmäßigsten sind. Im übrigen steht aber nichts entgegen, andere Querschnittsformen, wie bspw. in den Fig. 1C, 2, 3 dargestellt, ebenfalls mit solchen Versteifungswänden 5 auszustatten. Unter "Versteifungswand" sind dabei auch gitterartige Stabilisierungselemente zu verstehen.

Aus den genannten Gründen sind mindestens vorn vor den Umfangsrändern 6 der Träger 2 mindestens stirnseitig abgerundete Umfangsrandabschirmungen 7 angeordnet, die vorteilhaft als dem Umfangsprofil der Träger 2 entsprechende Rahmen 7' ausgebildet und diese in geeigneter Weise und mit dem erforderlichen Abstand an der Karosserie befestigt sind. Selbst wenn keine "Versteifungswände" 5 in den Trägern 2 eingezogen sind, können diese Rahmen 7' eine Konfiguration haben, wie strichpunktiert bspw. in Fig. 4A angedeutet.

Was die Radkästen 8 betrifft, so sind diese bei den dargestellten Ausführungsbeispielen voll in die Träger 2 integriert, wobei aber und wie in Fig. 1A gestrichelt angedeutet, ebenfalls zwecks Widerstandsreduzierung die frontalen Anströmflächen 8' der Radkästen 8 über die davor verfügbare Gesamtlänge der Träger 2 geneigt und erstreckt sind.

Abgesehen von der erwähnten Möglichkeit, die Träger 2 im Bedarfsfall als Transportraum für langes Transportgut nutzen zu können, ist es, wie in Fig. 4B gestrichelt angedeutet, außerdem möglich, in mindestens einem der Träger 2 in Längserstreckung längserstreckte, also kleine Anströmflächen aufweisende, Antriebskühlaggregate 9 anzuordnen, was mit wesentlich weniger Luftwiderstand verbunden ist als die bisher übliche Anordnung relativ großflächiger Kühler quer zur Fahrtrichtung.

## Patentansprüche

1. Personenkraftwagen, insbesondere PKW mit elektromotorischem Antrieb, bestehend aus einer Karosserie (1) mit mindestens drei Rädern (10), wobei die Seitenwände des die Sitze (3) enthaltenden Karosserieunterteiles (1) aus querverbundenen Hohlkörpern, deren Querschnitt mindestens der halben Querschnittsgröße des Karosserieunterteiles (1') entspricht, gebildet sind und das Oberteil (1'') der Karosserie (1) als mindestens teilweise zu öffnender Einstieg (4) ausgebildet ist,
**dadurch gekennzeichnet,**
daß die Hohlkörper aus zwei vorn und hinten am Kraftwagen offenen, rohrförmigen Trägern (2) gebildet sind und alle Querschnitte der Träger (2) zwischen den querschnittsgleichen Öffnungen (2') dem Querschnitt dieser Öffnungen entsprechen.

2. Kraftwagen nach Anspruch 1,
**dadurch gekennzeichnet,**
daß die Höhe (H) der Träger (2) gleich oder angenähert gleich ist der halben Gesamthöhe (H₁) der Karosserie (1).

3. Kraftwagen nach Anspruch 1 oder 2,
**dadurch gekennzeichnet,**
daß mindestens vorn vor den Umfangsrändern (6) der Träger (2) mindestens stirnseitig abgerundete Umfangsrandabschirmungen (7) angeordnet sind.

4. Kraftwagen nach Anspruch 3,
**dadurch gekennzeichnet,**
daß die Umfangsrandabschirmungen (7) als dem Umfangsprofil der Träger (2) entsprechende Rahmen (7') ausgebildet sind.

5. Kraftwagen nach einem der Ansprüche 1 bis 4,
**dadurch gekennzeichnet,**
daß die Radkästen (8) der Räder (10) zumindest teilweise in den Innenraum der Träger (2) ragend angeordnet sind und mindestens die frontalen Anströmflächen (8') der Radkästen (8) über die davor verfügbare Gesamtlänge der Träger (2) geneigt und erstreckt sind.

6. Kraftwagen nach einem der Ansprüche 1 bis 5,
**dadurch gekennzeichnet,**
daß in mindestens einem der Träger (2) in Längserstreckung längserstreckte Antriebskühlaggregate (9) angeordnet sind.

7. Kraftwagen nach einem der Ansprüche 1 bis 6,
**dadurch gekennzeichnet,**
daß in den Trägern (2) mindestens eine in Längsrichtung der Träger (2) erstreckte Versteifungswand (5) angeordnet ist.

## Claims

1. A private passenger car, in particular, an automotive vehicle provided with an electromotive drive, comprising a car body (1) having at least three wheels (10), with the side walls of the bottom part of the car body (1) containing the seats (3) being formed of cross-connected hollow bodies the cross-sections of which correspond to at least half the cross-sectional size of the bottom part (1') of the car body and with the upper part (1'') of the car body (1) being formed as an access (4) opening at least in part,
characterized in that the hollow bodies are formed of two tubular supports (2) open at the front and rear sides of the automotive vehicle, and that all cross-sections of the supports (2) between the openings (2') of identical cross-sections correspond to the cross-section of these openings.

2. An automotive vehicle according to claim 1, characterized in that the height (H) of the supports (2) corresponds or approximately corresponds to half the full height (H₁) of the car body (1).

3. An automotive vehicle according to claims 1 or 2, characterized in that cirumferential edge protections (7) rounded off at least at the front side are provided at least forwardly ahead of the circumferential edges (6).

4. An automotive vehicle according to claim 3, characterized in that the circumferential edge protections (7) are designed as frames (7') conforming to the circumferential profile of the supports (2).

5. An automotive vehicle according to any one of claims 1 to 4, characterized in that the wheel boxes (8) of the wheels (10) are arranged to protrude at least in part into the interior of the supports (2), and that at least the front-sided in-flow faces (8') of the wheel boxes (8) are inclined along the full length of the supports (2) available ahead thereof, extending therealong.

6. An automotive vehicle according to any one of claims 1 to 5, characterized in that cooling units (9) for cooling the drive, elongated in the longitudinal direction, are arranged in at least one of the supports (2).

7. An automotive vehicle according to any one of claims 1 to 6, characterized in that at least one reinforcing wall (5) extending in the longitudinal direction of the supports (2) is provided within the said supports (2).

## Revendications

1. Voiture particulière, en particulier voiture particulière à entraînement par moteur électrique, constituée par une carrosserie (1) avec au moins trois roues (10), les parois latérales de la partie inférieure (1) de la carrosserie, qui contient les sièges (3), étant formées par des corps creux reliés transversalement, dont la section correspond au moins à la moitié de la grandeur de la section de la partie inférieure (1') de la carrosserie, et la partie supérieure (1'') de la carrosserie (1) étant configurée comme accès (4) à ouvrir au moins partiellement,
**caractérisée en ce**
que les corps creux sont formés par deux supports (2) tubulaires, ouverts devant et derrière sur la voiture, et toutes les sections des supports (2) entre les ouvertures (2') de même section correspondant à la section de ces ouvertures.

2. Voiture selon la revendication 1,
**caractérisée en ce**
que la hauteur (H) des supports (2) est égale ou approximativement égale à la moitié de la hauteur (H₁) de la carrosserie (1).

3. Voiture selon la revendication 1 ou 2,
**caractérisée en ce**
que des protections (7) de bords périphériques, au moins arrondies sur la face frontale, sont placées au moins à l'avant devant les bords périphériques (6) des supports (2).

4. Voiture selon la revendication 3,
**caractérisée en ce**
que les protections (7) de bords périphériques sont configurées comme cadres (7') correspondant au profil périphérique des supports (2).

5. Voiture selon l'une des revendications 1 à 4,
**caractérisée en ce**
que les carters de roue (8) des roues (10) sont placés en faisant saillie au moins partiellement dans l'espace intérieur des supports (2) et qu'au moins les surfaces d'afflux frontal (8') des carters de roue (8) sont inclinées et étendues sur toute la longueur des supports (2) qui est disponible devant ceux-ci.

6. Voiture selon l'une des revendications 1 à 5,
**caractérisée en ce**
que des agrégats refroidisseurs de l'entraînement (9) étendus en longueur dans le sens de l'extension en longueur sont placés dans au moins l'un des supports (2).

7. Voiture selon l'une des revendications 1 à 6,
**caractérisée en ce**
qu'au moins une paroi de renforcement (5) étendue dans le sens longitudinal des supports (2) est placée dans les supports (2).
